# EUROPEAN PATENT SPECIFICATION

(11) **EP 1 332 825 B1**
(45) Date of publication and mention of the grant of the patent: **21.05.2014**
(21) Application number: 00956992.2
(22) Date of filing: 07.09.2000
(51) Int. Cl.: B23K 11/14, B23K 9/20

(54) **PROJECTION BOLT WELDING DEVICE**
VORRICHTUNG ZUM BUCKELSCHWEISSEN
DISPOSITIF DE SOUDAGE PAR PROJECTION

(30) Priority: 06.05.2000 JP 2000172721
(43) Date of publication of application: 06.08.2003
(73) Proprietor: Aoyama, Yoshitaka, Sakai-shi, Osaka 590-0114 (JP)
(72) Inventor: AOYAMA, Yoshitaka, Sakai-shi, Osaka 590-0114 (JP); AOYAMA, Shoji, Sakai-shi, Osaka 590-0114 (JP)
(74) Representative: Carpmael, Robert Maurice Charles
(86) International application number: PCT/JP2000/006082
(87) International publication number: WO 2001/085380

(56) References cited:
- EP-A- 0 715 924
- JP-A- 7 223 078
- JP-A- 7 276 061
- JP-A- 62 166 085
- US-A- 3 598 952

## Description

### Technical Field

The present invention concerns a welding system for welding a projection bolt composed of a shaft, a flange and a projection to a sheet-like work.

### Background Art

In the Japanese Patent Publication No. 2509103 is disclosed a technology of forming a receiving hole in which to insert the shaft of a projection bolt in a movable electrode so that the projection bolt held in the movable electrode is welded to a work such as steel sheet with an advancement of that electrode.

With the prior art as described above, the work must be moved in the case of a large work such as floor panel of automobile, etc. because the welding system itself is of stationary type, and the mechanism for it becomes extremely large in scale and, therefore, impracticable. As alternative, one may think of adopting a movable type welding system, but in that case special consideration must be given to the unit feeding projection bolts to the electrode. Namely, in installing a projection bolt feed unit on the welding system, a system advantageous for the feed to electrode must be applied. Moreover, the projection bolt composed of a shaft, a flange and a projection for welding must be held accurately, to obtain a good welding quality.

EP 0 715 924 discloses a component supply device for inserting components in receiving holes in mating members. A holding member, joined to one of a guide tube, temporarily holds components to be fed into mating members. Two separate electrodes are then used to weld the component to a structure.

JP 62166085 relates to a system for positioning nuts to be welded. A tube is provided through which the nuts are supplied.

### Disclosure of Invention

The projection bolt welding system according to the present invention is a system for welding a projection bolt according to claim 1. The shaft is inserted in the receiving hole from the projection bolt feed unit and, in that state, the welding frame moves to a prescribed point of the work where the projection for welding and the work are pressed against each other to energize and perform welding. Since the welding frame and the projection bolt feed unit are integrated into a single unit as described above, it becomes possible to move the electrode to the target point on the work to complete welding while feeding bolts to the electrode and, therefore, there is no need of installing any special equipment for moving a large work.

The projection bolt feed unit is disposed behind the electrode as seen from the direction of advancement of the welding frame. When the welding frame advances toward the work, it is important that the electrode holding the projection bolt reaches the welding point at its foremost position. It means that the projection bolt feed unit must not put any obstacle to the advancement of the welding frame. If the projection bolt feed unit was installed in front of the welding frame, this feed unit would interfere with other members in the surrounding area, making it impossible to perform welding of the bolt at any desired point. Since there is no problem of interference by the feed unit as explained above, a good welding behaviour is realized.

The projection bolt feed unit comprises a forward-backward moving feed rod, a holding head attached to the feed rod, and a drive unit for inserting the shaft of projection bolt into the receiving hole. Since the forward-backward moving feed rod protrudes from or retreats into the welding frame, the projection bolt fastened to the holding head is transferred successfully to a position between the two electrodes. Especially, as the shaft stops advancement of the feed rod at the position coaxial with the receiving hole, the movement of the shaft to the receiving hole can be made with good accuracy. The shaft, which is inserted into the receiving hole with an output of the drive unit, can ensure a feed of high reliability following the advancement of the feed rod.

The drive unit is fixed to the arm member of the welding frame, the forward-backward moving drive unit of the feed rod is fixed to the output member of the drive unit, and the feed rod is provided in a way to tilt in two directions against the arm member. With this construction, the shaft of the projection bolt held in the holding head stops at the position coaxial with the receiving hole, and is inserted into the receiving hole from that position. Because a forward-backward moving drive unit for the feed rod and a drive unit for guiding the shaft to the receiving hole are provided, the transfer of the bolt to a position between the two electrodes and the insertion of the shaft into the receiving hole can be performed accurately, and this behaviour is realized especially with the fact that the forward-backward moving drive unit is fixed to the output member of the drive unit. Moreover, since the feed rod can be tilted in two directions against the arm member, it becomes possible to move the projection bolt to a position between the two electrodes, and to attach a projection bolt feed unit to the welding frame to combine them into a single unit easily.

### Brief Description of the Drawings

Fig. 1 is a side view of the projecting bolt welding system showing an embodiment of the present invention;
Fig. 2 is a drawing showing part of Fig. 1 as seen from the right side;
Fig. 3 is a longitudinal sectional view showing the relation between the holding head and the receiving hole; and
Fig. 4 is a side view of the projecting bolt.

### Best Mode for Carrying Out the Invention

An embodiment of the present invention will be described in detail with reference to the drawings.

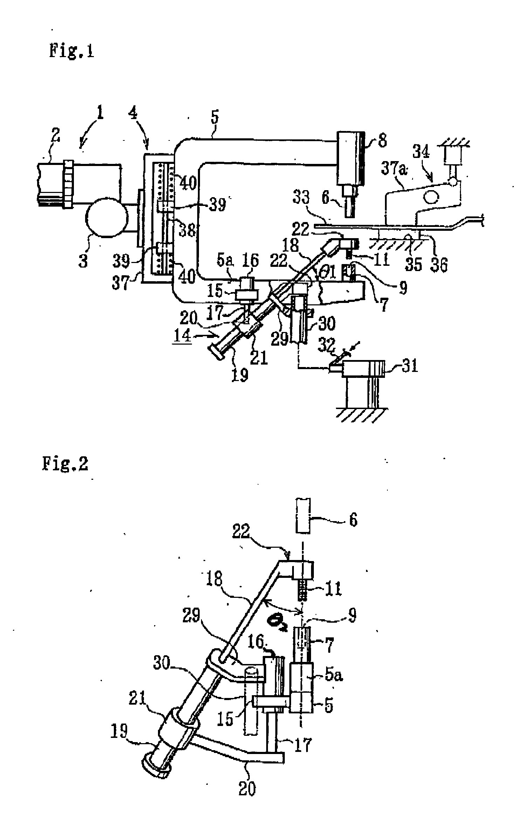

In Fig. 1, generically indicated with the reference numeral 1 is a robot system, where only an arm 2 and an articulatory joint 3 corresponding to the tip portion of that system are illustrated. The robot system 1 is of generally adopted 6-shaft type. To the articulatory joint 3 is coupled a welding frame 5 through an equalizer 4.

There are various forms of welding frame 5, but C type is given as example here. It may be X type instead of C type. At the tip of the welding frame 5 are installed a movable electrode 6 and a fixed electrode 7. The movable electrode is driven by an air cylinder 8 connected to the welding frame 5. An electric motor may be adopted in place of this air cylinder. The two electrodes 6, 7 are installed coaxially, and either of them has a receiving hole in which to insert the shaft of the projection bolt. In this embodiment, a receiving hole 9 is formed in the fixed electrode 7.

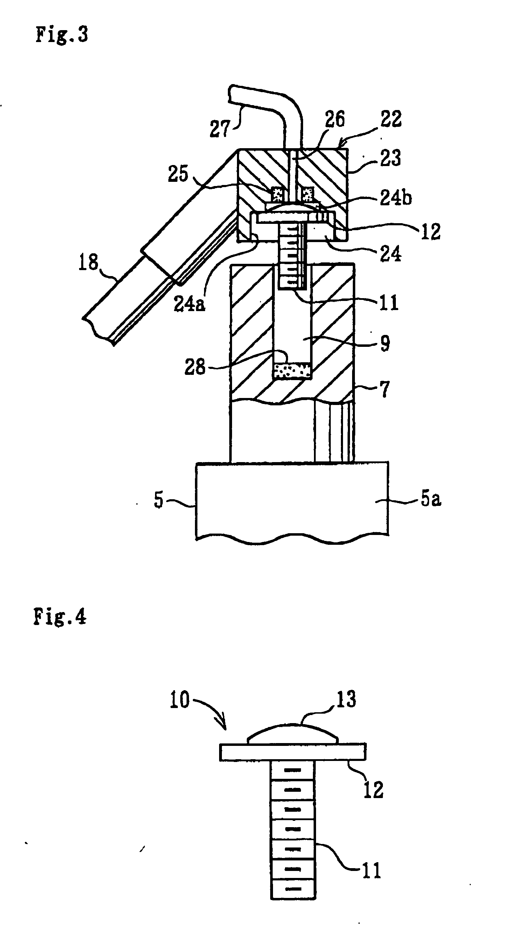

As shown in Fig. 4, an iron projection bolt is indicated with reference numeral 10, which is composed of a shaft 11, a round flange 12 integrated to it, and a projection for welding 13 formed on the flange face on the side opposite to the shaft 11. The projection for welding may also take the form of 3 or 4 projections in the shape of "wart" protruding on a flat flange face.

The projection bolt feed unit, which is indicated with reference numeral 14, is disposed on the rear side of the electrodes 6, 7 as seen in the direction of advancement of the welding frame 5, i.e. in the direction of the work on standby at an isolated point (right side in Fig. 1). In other words, when the welding frame 5 advances, the electrodes 6, 7 advance at the foremost position, and the feed unit is positioned behind them.

The laterally extending portion of the welding frame 5 is an arm member 5a, to the side face of which is fixed a bracket 15, and to this bracket is attached an air cylinder 16 which is a drive unit. To the piston rod 17 corresponding to the output member of the drive unit is fixed a forward-backward moving drive unit 19 of the feed rod 18. This unit 19 is composed of an air cylinder, and the piston rod 17 and the air cylinder 19 are integrated into a single unit through a coupling arm 20 and a coupling cylinder 21 attached to the air cylinder 19. Electric motors may be adopted in place of the air cylinders 16, 19. When electric motors are adopted, a mechanism for converting the rotation of each motor into a linear reciprocating motion is interposed.

The feed rod 18 is tilted in two directions, or in two planes, against the arm member 5a. The tilting is set for inclination at an angle of e1 as seen in the direction of Fig. 1 and inclination at an angle of è2 as seen in the direction of Fig. 2. Namely, the feed rod 18 and the arm member 5a are skew lines. To the tip of the feed rod 18 is coupled a holding head 22, so that the shaft 11 of the projection bolt held therein may be coaxial with the axis of the receiving hole 9 when the holding head 22 advances.

The axis of the holding head 22 crosses the axis of the feed rod 18 at an acute angle. As shown in Fig. 3, in the head body 23 is formed a round concavity 24 open downward, in which to house a flange 12. since a projection for welding 13 is integrated to the flange 12, in the concavity 24 are formed a large-diameter portion 24a for the flange 12 and a small-diameter portion 24b for the projection for welding 13 to also house that projection. In the depth of the concavity 24 is embedded a magnet (permanent magnet) 25, which temporarily retains the projection bolt 10 in a stable state by attracting the flange 12 placed in the concavity 24. The state at this time is that the outer circumference of the flange 12 is in close contact with the bottom face of the large-diameter portion 24a.

An air passage 26 is provided at the central part of the head body 23, and is open at the bottom of the small-diameter portion 24b. The flange 12 is made to get away forcibly from the concave portion 24 in resistance to the attraction of the magnet 25, with the compressed air from the air passage 26, to make the shaft 11 move completely into the receiving hole 9. The timing of feed of compressed air is set at the moment when part of the shaft 11 entered into the receiving hole 9. The reference numeral 27 denotes an air hose connected to the air passage 26, while 28 denotes a magnet (permanent magnet) installed at the depth of the receiving hole 9 and this magnet 28 attracts and securely holds the bolt 10 which moved into the receiving hole 9. In the case where the top and the bottom of Fig. 3 are reversed, holding of the bolt by the magnet 28 becomes essential.

When the feed rod 18 is at its retreat position, it is necessary to enable the flange 12 to advance into the concavity 24. For that purpose, a parts feed pipe 30 is connected to the bracket 29 fixed to the air cylinder 19, and its end agrees with the holding head 22 (illustrated with two-dot chain line in Fig. 1). A parts feed pipe 30 is connected to the parts feeder 31, and the bolt is carried up to the holding head 22 by the compressed air from an air hose 32.

The work 33 of steel sheet is fixed firmly by a clamp unit 34. This unit 34, which is an ordinary one, is a type with which the work 33 is pinched strongly between a base 36 fixed to a stationary member 35 and a rotary clamp arm 37a. When the welding frame 5 is returned, the work 33 is positioned at a separate point, but Fig. 1 indicates a state in which the welding frame 5 advanced to be positioned between the two electrodes 6 and 7.

The equalizer 4 is intended to make the entire welding frame 5 go up, as the movable electrode 6 advances with the air cylinder 8 to hit against the work 33, with the reaction force of that advancement, to press fit the fixed electrode 7 to the bottom face of the work 33. For that purpose, a channel-shaped frame member 37 is fixed to the articulatory joint 3, and a working shaft 38 installed on the frame member 37 slidably extends through brackets 39 fixed to the welding frame 5. Between each of the brackets 39 and an end wall of the frame member 37 is interposed a compression coil spring 40. As the reaction force by advancement of the movable electrode 6 acts on the welding frame 5, one of the compression coil springs 40 is compressed, resulting in an equalizing action.

The action of the above-described embodiment will now be explained. When the holding head 22 is at the position indicated with two-dot chain line in Fig. 1, the projection bolt 10 is sent from the parts feeder 31. At that time, the flange 12 and the projection for welding 13 of the bolt are housed in the concavity 24, and the shaft 11 protrudes downward from the holding head 22. Next, the feed rod 18 advances until at the position where the shaft 11 and the receiving hole 9 become coaxial with each other. After that, as the entire feed rod 18 is advanced by the action of the air cylinder 16, the shaft 11 advances into the receiving hole 9, and the shaft 11 i.e. the projection bolt 10 completely gets into the receiving hole 9 by the action of the compressed air from the air passage 26. Then, the holding head 22 returns to its initial position through a locus in reverse.

Next, as the welding frame 5 advances by the action of the robot system 1, the two electrodes 6 and 7 reach the work 33 which was on standby at a position away from the welding frame 5. As the movable electrode 6 advances after that, the equalizer 4 works to press the projection for welding 13 against the bottom face of the work 33 to energize and complete welding. When the movable electrode 6 retreated after welding of a first piece of the projection bolt 10, the welding frame 5 moves, by the action of the equalizer 4, to form a space between the fixed electrode 7 and the work 33. The holding head 22 advances into this space to feed the shaft 11 of a second piece of the projection bolt into the receiving hole 9 again, and perform welding. Namely, in the state in which the work 33 is installed between the two electrodes 6 and 7, the welding of projection bolts 10 is performed successively one after another.

The successive welding ensures the reduction of the moving locus of the welding frame 5, which in turn is effective for improvement in the working efficiency. The same action can be obtained even if the entire system in Fig. 1 is arranged upside down.

## Claims

1. A projection bolt welding system for welding a projection bolt (10) composed of a shaft (11), a flange (12) formed at one end cf the shaft (11) and a projection (13) for welding formed on a surface on the opposite side to said shaft (11) of said flange (12) to a sheet-like work (33), the system comprising
a welding frame (5) which is moveable to a required point by a robot system,
a movable electrode (6) and a fixed electrode (7); and
a projection bolt feed unit (14) attached to said welding frame (5);
the electrodes (6, 7) are installed on said welding frame (5);
a receiving hole (9) for receiving said shaft (11) is formed in one of said two electrodes(6, 7); **characterised in that**: and the projection bolt welding system further comprises an equaliser (4) arranged to move the welding frame (5) with a reaction force from the sheet-like work (33) in response to advancement of the movable electrode (6) to provide an equalising action between the movable electrode (6) and the fixed electrode (7) against the sheet-like work (33), wherein
said projection bolt feed unit (14) is disposed on the rear side of the electrodes (6, 7) as seen from a direction of advancement of said welding frame (5) towards the sheet-like work (33), so that, in use, when the welding frame advances, the electrodes (6, 7) are configured to advance at a foremost position and the projection bolt feed unit (14) is positioned behind said electrodes (6, 7), and
comprises a forward-backward moving feed rod (18), a holding head (22) attached to said feed rod (18), and a first drive unit (16) for putting the shaft (11) of said projection bolt (10) into a position coaxial with said receiving hole (9); and
said first drive unit (16) is fixed to an arm member (5a, 15) of said welding frame (5), a forward-backward moving second drive unit(19) of said feed rod (18) is fixed to an output member (17) of said first drive unit (16), and said feed rod (18) is provided in a way to tilt in two directions against said arm member (5a, 15), to thereby be configured to stop the shaft (11) of said projection bolt (10) held in said holding head (22) at the position coaxial with said receiving hole (9), and the first drive unit (16) is arranged to insert said shaft (11) into said receiving hole (9) from that stop position.

2. A projection bolt welding system for welding a projection bolt (10) as defined in claim 1, wherein the moveable electrode is moveable by an air cylinder connected to the welding frame, or by an electric motor.

3. A projection bolt welding system for a welding projection bolt (10) as defined in claim 1 or 2, wherein either or both of said first and second drive units is an air cylinder.

4. A projection bolt welding system for a welding projection bolt (10) as defined in claim 1 or 2, wherein either or both of said first and second drive units is an electric motor and a mechanism for converting rotation of the motor into a linear reciprocating motion is interposed between the motor and the drive unit.

5. A projection bolt welding system for a welding projection bolt (10) as defined in any one of claims 1 to 4, wherein said holding head comprises a head body (23) and in the head body (23) a concavity (24) is formed, and wherein a first magnet (25) is embedded in the concavity (24).

6. A projection bolt welding system for a welding projection bolt (10) as defined in claim 5, wherein an air passage is provided at a central part of the head body (23).

7. A projection bolt welding system for a welding projection bolt (10) as defined in claim 5 or 6, wherein a second magnet (28) is installed in the receiving hole (9).

8. A projection bolt welding system for a welding projection bolt (10) as defined in any one of claims 1 to 7, wherein a parts feed pipe (30) is connected to a bracket (29) fixed to the second drive unit (19), and wherein an end of said parts feed pipe agrees with the holding head (22).

9. A projection bolt welding system for a welding projection bolt (10) as defined in claim 8, wherein the parts feed pipe (30) is connected to a parts feeder (31).

10. A projection bolt welding system for welding a protection bolt (10) as defined in any one of the preceding claims, wherein brackets (39) are fixed to the welding frame (5), and a working shaft (38) slidably extends through the brackets (39) and a compression coil spring (40) is interposed between each of the brackets (39) and an end wall of a channel-shaped frame member (37).

## Patentansprüche

1. Buckelbolzen-Schweißsystem zum Schweißen eines Buckelbolzens (10), der aus einem Schaft (11), einem Flansch (12), der an einem Ende des Schafts (11) geformt ist, und einem Buckel (13) zum Schweißen, der an einer Fläche auf der zu dem Schaft (11) entgegengesetzten Seite des Flanschs (12) geformt ist, besteht, an ein plattenartiges Werkstück (33), wobei das System Folgendes umfasst:
ein Schweißgestell (5), das durch ein Robotersystem zu einem erforderlichen Punkt bewegt werden kann,
eine bewegliche Elektrode (6) und eine unbewegliche Elektrode (7) und
eine Buckelbolzen-Zufuhreinheit (14), die an dem Schweißgestell (5) befestigt ist,
wobei die Elektroden (6, 7) an dem Schweißgestell (5) installiert sind,
wobei ein Aufnahmeloch (9) zum Aufnehmen des Schafts (11) in einer der zwei Elektroden (6, 7) geformt ist, **dadurch gekennzeichnet, dass**:
das Buckelbolzen-Schweißsystem ferner eine Ausgleichvorrichtung (4) umfasst, die dafür angeordnet ist, als Reaktion auf ein Vorschieben der beweglichen Elektrode (6) das Schweißgestell (5) mit einer Reaktionskraft von dem plattenartigen Werkstück (33) zu bewegen, um eine Ausgleichsbewegung zwischen der beweglichen Elektrode (6) und der unbeweglichen Elektrode (7) gegenüber dem plattenartigen Werkstück (33) zu gewährleisten, wobei
die Buckelbolzen-Zufuhreinheit (14) auf der Rückseite der Elektroden (6, 7), gesehen aus einer Vorschubrichtung des Schweißgestells (5) zu dem plattenartigen Werkstück (33) hin, angeordnet ist, so dass die Elektroden (6, 7) dafür konfiguriert sind, sich bei Anwendung, wenn sich das Schweißgestell vorschiebt, an einer vordersten Stellung vorzuschieben, und die Buckelbolzen-Zufuhreinheit (14) hinter den Elektroden (6, 7) angeordnet ist und eine sich vor- und zurückbewegende Zufuhrstange (18), einen Haltekopf (22), der an der Zufuhrstange (18) befestigt ist, und eine erste Antriebseinheit (16), um den Schaft (11) des Buckelbolzens (10) in eine Stellung, koaxial mit dem Aufnahmeloch (9) zu bringen, umfasst, und
wobei die erste Antriebseinheit (16) an einem Armelement (5a, 15) des Schweißgestells (5) befestigt ist, eine sich vor- und zurückbewegende zweite Antriebseinheit (19) der Zufuhrstange (18) an einem Abtriebselement (17) der ersten Antriebseinheit (16) befestigt ist und die Zufuhrstange (18) auf eine Weise bereitgestellt wird, dass sie in zwei Richtungen gegenüber dem Armelement (5a, 15) kippt, um dadurch dafür konfiguriert zu sein, den Schaft (11) des Buckelbolzens (10), der in dem Haltekopf (22) an der Stellung, koaxial mit dem Aufnahmeloch (9) gehalten wird, anzuhalten, und die erste Antriebseinheit (16) dafür angeordnet ist, den Schaft (11) von dieser Haltestellung in das Aufnahmeloch (9) einzusetzen.

2. Buckelbolzen-Schweißsystem zum Schweißen eines Buckelbolzens (10) nach Anspruch 1, wobei die bewegliche Elektrode durch einen Luftzylinder, der mit dem Schweißgestell verbunden ist, oder durch einen Elektromotor bewegt werden kann.

3. Buckelbolzen-Schweißsystem zum Schweißen eines Buckelbolzens (10) nach Anspruch 1 oder 2, wobei entweder eine oder beide von der ersten und der zweiten Antriebseinheit ein Luftzylinder ist.

4. Buckelbolzen-Schweißsystem zum Schweißen eines Buckelbolzens (10) nach Anspruch 1 oder 2, wobei entweder eine oder beide von der ersten und der zweiten Antriebseinheit ein Elektromotor ist und ein Mechanismus zum Umwandeln der Drehung des Motors in eine lineare Hin- und Herbewegung zwischen den Motor und die Antriebseinheit zwischengeschaltet ist.

5. Buckelbolzen-Schweißsystem zum Schweißen eines Buckelbolzens (10) nach einem der Ansprüche 1 bis 4, wobei der Haltekopf einen Kopfkörper (23) umfasst und in dem Kopfkörper (23) eine Höhlung (24) geformt ist und wobei ein erster Magnet (25) in der Höhlung (24) eingebettet ist.

6. Buckelbolzen-Schweißsystem zum Schweißen eines Buckelbolzens (10) nach Anspruch 5, wobei ein Luftdurchgang an einem mittleren Teil des Kopfkörpers (23) bereitgestellt wird.

7. Buckelbolzen-Schweißsystem zum Schweißen eines Buckelbolzens (10) nach Anspruch 5 oder 6, wobei ein zweiter Magnet (28) in dem Aufnahmeloch (9) installiert ist.

8. Buckelbolzen-Schweißsystem zum Schweißen eines Buckelbolzens (10) nach einem der Ansprüche 1 bis 7, wobei ein Teilezufuhrrohr (30) mit einer Stütze (29) verbunden ist, die an der zweiten Antriebseinheit (19) befestigt ist, und wobei ein Ende des Teilezufuhrrohrs mit dem Haltekopf (22) übereinstimmt.

9. Buckelbolzen-Schweißsystem zum Schweißen eines Buckelbolzens (10) nach Anspruch 8, wobei Teilezufuhrrohr (30) mit einer Teilezufuhreinrichtung (31) verbunden ist.

10. Buckelbolzen-Schweißsystem zum Schweißen eines Buckelbolzens (10) nach einem der vorhergehenden Ansprüche, wobei Stützen (39) an dem Schweißgestell (5) befestigt sind und sich eine Arbeitswelle (38) verschiebbar durch die Stützen (39) erstreckt und eine Druckschraubenfeder (40) zwischen jede der Stützen (39) und eine Stirnwand eines kanalförmigen Gestellelements (37) zwischengeschaltet ist.

## Revendications

1. Système de soudage de boulon à bossage pour le soudage sur une pièce d'oeuvre (33) similaire à une tôle d'un boulon à bossage (10) constitué d'une tige (11), d'une bride (12) formée à une extrémité de la tige (11) et d'un bossage (13) pour la soudure formé sur une surface sur le côté opposé à ladite tige (11) de ladite bride (12), le système comprenant:
un cadre de soudage (5) qui peut être déplacé vers un point requis par un système robotisé;
une électrode mobile (6) et une électrode fixe (7); et
une unité (14) d'amenée de boulon à bossage fixée sur ledit cadre de soudage (5);
les électrodes (6, 7) sont installées sur ledit cadre de soudage (5);
un trou de réception (9) destiné à recevoir ladite tige (11) est formé dans l'une desdites deux électrodes (6, 7);
**caractérisé par le fait que** le système de soudage de boulon à bossage comprend, en outre, un dispositif équilibreur (4) adapté pour déplacer le cadre de soudage (5) avec une force de réaction provenant de la pièce d'oeuvre (33) similaire à une tôle en réponse à l'avancement de l'électrode mobile (6) pour fournir une action d'équilibrage entre l'électrode mobile (6) et l'électrode fixe (7) contre la pièce d'oeuvre (33) similaire à une tôle, dans lequel
ladite unité (14) d'amenée de boulon à bossage est située sur le côté arrière des électrodes (6, 7), considéré par rapport à la direction d'avancement dudit cadre de soudage (5) vers la pièce d'oeuvre (33) similaire à une tôle, de sorte que, lors de l'utilisation, lorsque le cadre de soudage avance, les électrodes (6, 7) sont configurées pour avancer dans une position la plus en avant et l'unité (14) d'amenée de boulon à bossage est positionnée derrière lesdites électrodes (6, 7), et elle comprend une tige d'amenée (18) mobile en avant et en arrière, une tête de maintien (22) fixée à ladite tige d'amenée (18) et une première unité de commande (16) permettant de placer la tige (11) dudit boulon à bossage (10) dans une position coaxiale avec ledit trou de réception (9); et
ladite première unité de commande (16) est fixée sur un élément de bras (5a, 15) dudit cadre de soudage (5), une seconde unité de commande (19), mobile en avant et en arrière, de ladite tige d'amenée (18) est fixée sur un élément de sortie (17) de ladite première unité de commande (16), et ladite tige d'amenée (18) est prévue pour s'incliner dans deux directions par rapport audit élément de bras (5a, 15), grâce à quoi elle est configurée pour arrêter la tige (11) dudit boulon à bossage (10) maintenu dans ladite tête de maintien (22) au niveau de la position coaxiale avec ledit trou de réception (9), et la première unité de commande (16) est adaptée pour insérer ladite tige (11) dans ledit trou de réception (9) à partir de cette position d'arrêt.

2. Système de soudage de boulon à bossage pour le soudage d'un boulon à bossage (10) tel que défini dans la revendication 1, dans lequel l'électrode mobile peut être déplacée au moyen d'un cylindre à air relié au cadre de soudage ou au moyen d'un moteur électrique.

3. Système de soudage de boulon à bossage pour le soudage d'un boulon à bossage (10) tel que défini dans la revendication 1 ou 2, dans lequel l'une ou l'autres desdites première et seconde unités de commande, ou les deux, est(sont) un(des) cylindre(s) à air.

4. Système de soudage de boulon à bossage pour le soudage d'un boulon à bossage (10) tel que défini dans la revendication 1 ou 2, dans lequel l'une ou l'autre desdites première et seconde unités de commande, ou les deux, est(sont) un(des) moteur(s) électrique(s) et un mécanisme permettant de convertir la rotation du moteur en un mouvement linéaire réciproque est intercalé entre le moteur et l'unité de commande.

5. Système de soudage de boulon à bossage pour le soudage d'un boulon à bossage (10) tel que défini dans l'une quelconque des revendications 1 à 4, dans lequel ladite tête de maintien comprend un corps de tête (23) et une concavité (24) est formée dans le corps de tête (23), et dans lequel un premier aimant (25) est inséré dans la concavité (24).

6. Système de soudage de boulon à bossage pour le soudage d'un boulon à bossage (10) tel que défini dans la revendication 5, dans lequel un passage d'air est prévu au niveau d'une partie centrale du corps de tête (23).

7. Système de soudage de boulon à bossage pour le soudage d'un boulon à bossage (10) tel que défini dans la revendication 5 ou 6, dans lequel un second aimant (28) est installé dans le trou de réception (9).

8. Système de soudage de boulon à bossage pour le soudage d'un boulon à bossage (10) tel que défini dans l'une quelconque des revendications 1 à 7, dans lequel un tube (30) d'alimentation de pièces individuelles est relié à une patte d'attache (29) fixée sur la seconde unité de commande (19) et dans lequel une extrémité dudit tube d'alimentation de pièces individuelles s'aligne avec la tête de maintien (22).

9. Système de soudage de boulon à bossage pour le soudage d'un boulon à bossage (10) tel que défini dans la revendication 8, dans lequel le tube (30) d'alimentation de pièces individuelles est relié à un distributeur (31) de pièces individuelles.

10. Système de soudage de boulon à bossage pour le soudage d'un boulon à bossage (10) tel que défini dans l'une quelconque des revendications précédentes, dans lequel des supports (39) sont fixés sur le cadre de soudage (5) et un arbre de travail (38) s'étend de manière coulissante à travers les supports (39) et un ressort à boudin de pression (40) est intercalé entre chacun des supports (39) une paroi d'extrémité d'un élément de cadre (37) en forme de canal.
